# EUROPÄISCHE PATENTSCHRIFT

(11) **EP 3 900 158 B1**
(45) Veröffentlichungstag und Bekanntmachung des Hinweises auf die Patenterteilung: **24.01.2024**
(21) Anmeldenummer: 19832907.0
(22) Anmeldetag: 18.12.2019
(51) Int. Cl.: H02K 3/18, H02K 15/085

(54) **ELEKTRISCHER LEITER UND DESSEN HERSTELLUNG**
ELECTRICAL CONDUCTOR AND PRODUCTION OF SAME
CONDUCTEUR ÉLECTRIQUE ET SA FABRICATION

(30) Priorität: 19.12.2018 DE 102018132937; 05.04.2019 DE 102019109060
(43) Veröffentlichungstag der Anmeldung: 27.10.2021
(73) Patentinhaber: Fraunhofer-Gesellschaft zur Förderung der angewandten Forschung e.V., 80686 München (DE)
(72) Erfinder: WILKEN, Ralph, 28359 Bremen (DE); SPECHT, Uwe, 28359 Bremen (DE); WÖSTMANN, Franz-Josef, 28359 Bremen (DE)
(74) Vertreter: Eisenführ Speiser
(86) Internationale Anmeldenummer: PCT/EP2019/086115
(87) Internationale Veröffentlichungsnummer: WO 2020/127597

(56) Entgegenhaltungen:
- EP-A2- 2 819 276
- WO-A1-2015/198432
- GRONINGER M ET AL: "Casting production of coils for electrical machines", ELECTRIC DRIVES PRODUCTION CONFERENCE (EDPC), 2011 1ST INTERNATIONAL, IEEE, 28. September 2011 (2011-09-28), Seiten 159-161, XP032000385, DOI: 10.1109/EDPC.2011.6085534 ISBN: 978-1-4577-1371-2

## Beschreibung

Die vorliegende Erfindung betrifft einen elektrischen Leiter, umlaufend einen magnetisierbaren Kern oder mehrere magnetisierbare Kerne, wobei der elektrische Leiter entlang des Umlaufes oder entlang mehrerer oder sämtlicher Umläufe wenigstens einen Bereich (i) aus gegossenem oder durch Gießen erzeugbarem Material umfasst und einen Bereich (ii) aus mit gegenüber dem gegossenen oder durch Gießen erzeugbaren Material des Bereiches (i) verändertem Leitermaterial.

Die Erfindung betrifft ferner elektrische Bauteile, insbesondere einen Stator, einen Rotor, eine Drossel, einen Transformator oder eine Spule, umfassend einen erfindungsgemäßen elektrischen Leiter sowie ein Verfahren zum Herstellen des erfindungsgemäßen elektrischen Leiters.

Im Zuge der Elektromobilität gewinnen kostengünstige Elektromotoren mit hoher Leistung und geringem Bauraum an Bedeutung. Neben einem hohen Wirkungsgrad ist es notwendig, die bei hoher Leistungsabnahme des Elektromotors entstehende Wärme gut abzutransportieren, um ein Überhitzen des Motors zu verhindern. Die Wärme entsteht primär im Bereich der Spulen, sekundär im Bereich der Blechpakete.

Ein hoher Nutfüllfaktor ist sowohl für eine kompakte Bauweise, für hohe Leistungsdichten als auch für eine gute Wärmeleitung vorteilhaft.

Gewünscht sind für viele Anwendungen Formspulen, bei denen die Leiterquerschnitte nicht kreisförmig sind, sondern sich einem Rechteck annähern. Hiermit wird gewährleistet, dass ein hoher Nutfüllfaktor erreicht werden kann und gleichzeitig die Wärme gut abgeführt werden kann.

Diese Anforderung wird nach dem Stand der Technik durch Rechteckleiter gelöst, die hochkant zu Spulen gewickelt werden (Zahnsteckspule) oder durch gegossene Spulen (ebenfalls Zahnsteckspule).

Verteilte Wicklungen lassen sich zu Rechteckleitern mit umgeformten Drähten realisieren. Hairpin-Wicklungen erlauben verteilte Wicklungen mit rechteckigen Leitungsquerschnitten.

Es gibt eine Veröffentlichung, bei der einzelne Spulensegmente in die Nuten der Statoren eingeschoben werden und durch eine komplexe Verschaltung eine hohe Effizienz bei verschiedenen Betriebspunkten eines Elektromotors erlauben, siehe https://www.volabo.com/de/tech (Fa. volabo GmbH, Alte Landstraße 23, 85521 Ottobrunn).

Im Stand der Technik sind Kontaktierungsschienen bekannt, die einzelne Spulen bzw. Spulenabschnitte miteinander verbinden. Diese sind aufwändig zu fertigen und setzen eine zuverlässige Verbindungstechnik voraus.

Bei den beschriebenen technischen Lösungen stellen einerseits eine einfache Montage und andererseits eine einfache Verschaltung am Wickelkopf diametrale Gegensätze dar. Während eine Steckspule hinsichtlich der Verschaltung am Wickelkopf selbstverständlich keine Probleme bereitet, ist sie verhältnismäßig schwer zu montieren, insbesondere ist es bei Steckspulen auch schwierig, ideale geometrische Strukturen für einen hohen Nutfüllfaktor bei gegebener Montierbarkeit zu realisieren.

Dagegen ist eine Montage verhältnismäßig einfach, wenn einzelne Leiter (oder sogenannte Hairpin-Leiter) entlang der Blechpakete montiert werden; hier ist es aber kompliziert, die Leiter zu verschalten bzw. zu kontaktieren. Strenggenommen muss jeder montierte Einzelleiter einzeln mit seinem Kontaktierungsziel bzw. Verschaltziel (im Regelfall ein weiterer Einzelleiter) verbunden werden. Dies ist nicht nur arbeitsaufwändig, sondern das Risiko einer Fehlverschaltung ist zusätzlich gegeben. Hinzu kommt noch, dass im Falle der Erstellung von Wicklungen aus Einzelleitern es nicht trivial ist, eine ausreichende Isolation im Bereich der (vielen) Kontaktierungsstellen zu gewährleisten. Zumindest ist die Wahrscheinlichkeit sehr hoch, dass im Bereich der Verschaltung/Kontaktierung einzelne Isolationsschwachpunkte entstehen.

Vor diesem Hintergrund war es Aufgabe der vorliegenden Erfindung, einen elektrischen Leiter anzugeben, der es ermöglicht, auch komplizierte Verschaltungen mit hoher Sicherheit und möglichst wenig Arbeitsaufwand zu gewährleisten, wobei gleichzeitig ein hoher Nutfüllfaktor oder allgemein Füllfaktor erreichbar sein sollte.

WO 2015 198432 A1 zeigt ein Herstellungsverfahren für eine Flachdraht- Statorspule.

Diese Aufgabe wird gelöst durch einen elektrischen Leiter umlaufend einen magnetisierbaren Kern oder mehrere magnetisierbare Kerne gemäß Anspruch 1.

Ein elektrischer Leiter im Sinne der vorliegenden Erfindung ist eine Leiterbahn, die aus einem Material besteht, das über eine Leitfähigkeit von ≥ 1 × 10⁵ S/m, bevorzugt über ≥ 1 × 10⁶ S/m verfügt.

"Umlaufend einen Kern" bedeutet im Sinne der vorliegenden Erfindung für einen Leiter, dass er wenigstens einmal einen Verlauf hat, bei dem er mindestens in einer Flächenprojektion 360° um den Kern herum geführt wird. Dabei müssen diese 360° nicht an einem Stück sein, sondern es können auch Leiterabschnitte vorliegen, die von dem Kern weggehen und wobei der Leiter später wieder zu dem Kern zurückkehrt und dann weitere Teile des "Umlaufes" erfüllt.

Bevorzugt im Sinne der vorliegenden Erfindung ist allerdings, dass der elektrische Leiter im Sinne der vorhergehenden Definition ≥ 2, bevorzugt ≥ 5 und besonders bevorzugt ≥ 10 Umläufe aufweist.

Die Formulierung, dass der Bereich (i) "über mindestens zwei Kontaktbereiche, bevorzugt genau zwei Kontaktbereiche verfügt, die Übergang zu einem Bereich (ii) darstellen", bedeutet im Sinne der vorliegenden Erfindung nicht, dass beide Kontaktbereiche zu demselben Bereich (ii) im Übergang darstellen müssen. Im Sinne der Erfindung ist insbesondere damit gemeint, dass die beiden Kontaktbereiche den Übergang zu zwei verschiedenen Bereichen (ii) darstellen. Dies ist insbesondere dann der Fall, wenn sich die Bereiche (i) und (ii) entlang des elektrischen Leiters wiederholt abwechseln, was natürlich im Sinne der vorliegenden Erfindung bevorzugt ist, insbesondere, wenn der elektrische Leiter mehr als einen Umlauf um den magnetisierbaren Kern besitzt.

Ein "magnetisierbarer Kern" im Sinne der vorliegenden Erfindung ist ein Materialbereich (um den der erfindungsgemäße elektrische Leiter angeordnet ist), der insbesondere bei einem Stromfluss durch den Leiter seinen Magnetisierungszustand ändern kann. Bevorzugt im Sinne der vorliegenden Erfindung ist ein magnetisierbarer Kern ein ferromagnetisch magnetisierbarer Kern, weiter bevorzugt mit einer magnetischen Permeabilität des Ferromagneten von µᵣ≥ 1, bevorzugt ≥ 2, weiter bevorzugt ≥ 80, jeweils gemessen bei 50 Hz und 1500 mT. Im Zweifelsfall erfolgt die Messung der magnetischen Eigenschaften mit Hilfe des Epsteinrahmens nach DIN EN 60404.

Alternativ bevorzugt oder noch weiter bevorzugt besitzt der magnetisierbare Kern eine maximale Induktion bei 50 Hz von ≥ 1 T. Im Zweifelsfall erfolgt die Messung der magnetischen Eigenschaften mit Hilfe des Epsteinrahmens nach DIN EN 60404.

Grundsätzlich bevorzugt für einen magnetisierbaren Kern für den Einsatz im Sinne der vorliegenden Erfindung sind weichmagnetische Materialien mit Hystereseverlusten bei 50 Hz und magnetischer Polarisation (Peak) B (peak) von 1,5 T von ≤ 10 W/kg, bevorzugt ≤ 5 W/kg, weiter bevorzugt ≤ 4 W/kg, noch weiter bevorzugt ≤ 3 W/kg und besonders bevorzugt ≤ 2 W/kg. Im Zweifelsfall erfolgt die Messung der magnetischen Eigenschaften mit Hilfe des Epsteinrahmens nach DIN EN 60404.

Weiter bevorzugt besitzt ein magnetisierbarer Kern zum Einsatz im Rahmen der vorliegenden Erfindung Ummagnetisierungsverluste bei 50 Hz und magnetischer Polarisation (Peak) B (peak) von 1,5 T von ≤ 10 W/kg, bevorzugt ≤ 5 W/kg, weiter bevorzugt ≤ 4 W/kg, noch weiter bevorzugt ≤ 3 W/kg und besonders bevorzugt ≤ 2 W/kg, wobei der Ummagnetisierungsverlust der Hystereseverlust plus der Wirbelstromverlust ist. Im Zweifelsfall erfolgt die Messung der magnetischen Eigenschaften mit Hilfe des Epsteinrahmens nach DIN EN 60404.

Ein "gegossenes oder durch Gießen erzeugbares Material" im Sinne der vorliegenden Erfindung ist bevorzugt ein Metall oder eine Metalllegierung und verfügt stets über eine Porosität von ≥ 0,1 Vol.-%, bevorzugt ≥ 0,5 Vol.-%, weiter bevorzugt ≥ 1 Vol.-%. Unter Porosität wird der Volumenanteil verstanden, bei dem die Dichte um den Faktor > 100 niedriger ist als die umgebenden Bereiche. Die Porosität schließt neben Poren auch Lunker ein.

Die Porosität wird im Zweifelsfall im Sinne der vorliegenden Erfindung mittels Mikro-CT-Verfahren gemessen.

Bevorzugt besitzen die den Bereich (i) aus gegossenem oder durch Gießen erzeugbares Material kennzeichnenden Poren eine Größe von 0,3 µm bis 1 mm, bevorzugt 5 µm bis 100 µm Porendurchmesser, jeweils bezogen auf den größten Porendurchmesser, wobei nur solche Hohlräume als Pore definiert sind, bei denen die Aspektverhältnisse der verschiedenen Räumrichtungen nicht mehr als eine Größenordnung voneinander abweichen.

Weiter oder alternativ bevorzugt besitzen die den Bereich (i) aus gegossenem oder durch Gießen erzeugbares Material kennzeichnenden Lunker eine Größe von 0,3 µm bis 1 mm, bevorzugt 5 µm bis 100 µm Lunkerdurchmesser, jeweils bezogen auf den größten Lunkerdurchmesser, wobei nur solche Hohlräume als Lunker definiert sind, bei denen die Aspektverhältnisse der verschiedenen Raumrichtungen mehr als eine Größenordnung oder gleich einer Größenordnung voneinander abweichen.

Per Definition ist der Bereich (ii) mit dem gegenüber dem gegossenen oder durch Gießen erzeugbaren Material des Bereiches (i) veränderten Leitermaterial aus einem Material bestehend, das über eine kleinere Porosität verfügt als das Material des Bereiches (i).

Die Größe der Poren wird ebenfalls bevorzugt mittels Mikro-CT gemessen. Die Größe der Lunker wird ebenfalls bevorzugt mittels Mikro-CT gemessen

Der erfindungsgemäße elektrische Leiter ermöglicht aufgrund seiner speziellen Bauart aus wenigstens den Bereichen (i) und (ii) aufgrund der Zugänglichkeit über einfache und zuverlässige Herstellungsmethoden (vgl. weiter unten), die Nachteile des Standes der Technik weitgehend zu überwinden, das heißt, er ermöglicht es, eine sichere Verschaltung bei guter Raumausnutzung zu gewährleisten.

Bevorzugt ist, dass der erfindungsgemäße elektrische Leiter dafür eingerichtet ist, dass er mit einer externen Stromversorgung kontaktiert werden kann oder bevorzugt tatsächlich kontaktiert ist.

Definiert ist ein erfindungsgemäßer elektrischer Leiter, wobei der elektrische Leiter entlang des Umlaufes oder entlang mehrerer oder sämtlicher Umläufe jeweils genau einen Bereich (i) aus gegossenem oder durch Gießen erzeugbaren Material umfasst, der über zwei Kontaktbereiche verfügt, die den Übergang zu einem Bereich (ii) aus mit gegenüber dem gegossenen oder durch Gießen erzeugbaren Material des Bereiches (i) verändertem Leitermaterial darstellen oder jeweils genau zwei Bereiche (i) aus gegossenem oder durch Gießen erzeugbaren Material umfasst, die jeweils über zwei Kontaktbereiche verfügen, die den Übergang zu einem Bereich (ii) aus mit gegenüber dem gegossenen oder durch Gie-ßen erzeugbaren Material des Bereiches (i) verändertem Leitermaterial darstellen.

Dabei bedeutet die Formulierung des vorherigen Absatzes, dass im Falle von mehreren oder sämtlichen Umläufen sowohl solche Umläufe mit entsprechend genau einem Bereich (i) als auch solche mit zwei Bereichen (i) wie zuvor definiert vorhanden sein können. Sofern sämtliche Umläufe des erfindungsgemäßen elektrischen Leiters übergenau einen Bereich (i) oder übergenau zwei Bereiche (i) verfügen, so ist es bevorzugt, dass das Verhältnis der Umläufe, die über genau einen Bereich (i) verfügen gegenüber den Umläufen, die genau über zwei Bereiche (i) verfügen ≥ 5, bevorzugt ≥ 10 und besonders bevorzugt ≥ 20 ist. Diese Formen von elektrischen Leitern sind besonders gut über das weiter unten beschriebene bevorzugte erfindungsgemäße Verfahren herstellbar.

Bevorzugt ist ein erfindungsgemäßer elektrischer Leiter, wobei der Bereich (i) über eine größere Leiterquerschnittsfläche verfügt als der Bereich (ii).

Der Leiterquerschnitt wird dabei im Zweifelsfall senkrecht zur Stromrichtung gemessen. Der Vorteil an der bevorzugten erfindungsgemäßen Ausgestaltung ist für den Fachmann leicht nachvollziehbar: Die größere Leiterquerschnittsfläche des Bereiches (i) senkt den Widerstand, der ja im Bereich (i) aufgrund der vorhandenen Porosität größer ist als im Bereich (ii). Somit ist es möglich, im erfindungsgemäßen Leiter eine Ausgestaltung zu wählen, in der der gegossene Bereich den Widerstand weniger oder gar nicht heraufsetzt. Bevorzugt ist ein erfindungsgemäßer elektrischer Leiter, wobei das Material des Bereiches (ii) ein nicht gegossenes und nicht durch Gießen erzeugbares Material ist, bevorzugt ausgewählt bestehend aus der Gruppe bestehend aus gezogenem Draht, geschnittenen Formteilen aus Walzware, stranggepressten Formteilen, extrudierten Formteilen, gesinterten Formteilen und gestanzten Halbzeugen oder Blechsegmenten.

Wie weiter unten beschrieben wird, sind die erfindungsgemäßen elektrischen Leiter mittels des erfindungsgemäßen Verfahrens hergestellt, wobei Teilleiterbahnen durch einen Gießprozess zu einem Gesamtleiter verbunden werden. Die vordem Gießprozess vorhandenen Teilleiterbahnen sind die des Bereiches (ii) und es hat sich herausgestellt, dass die beschriebenen bevorzugten Herstellungsverfahren für diese Bereiche sich im Sinne der vorliegenden Erfindung besonders gut eignen.

Erfindungsgemäß bevorzugt ist ein erfindungsgemäßer elektrischer Leiter, wobei das Material des Bereiches (i) und/oder des Bereiches (ii) aus Gold, Silber, Kupfer, Magnesium oder Aluminium oder deren Legierungen gegebenenfalls auch mit weiteren Elementen besteht.

Diese Materialien eignen sich besonders für die erfindungsgemäßen Leiter.

Bevorzugt ist ein erfindungsgemäßer elektrischer Leiter, wobei der magnetisierbare Kern
- ein Spulenkern, insbesondere ein lamellierter Spulenkern, besonders bevorzugt ein Rotorblechpaket oder ein Statorblechpaket oder ein Teil davon oder
- ein Kern aus Vollmaterial, bevorzugt aus massivem Weicheisen oder
- ein Pulverkern, bevorzugt bestehend aus FeSi, NiFe, CoFe oder
- ein Ferritkern oder
- ein Hybridkern aus mit einer Isolationsschicht ummanteltem weichmagnetischem Material ist.

Grundsätzlich bevorzugt ist es, dass der magnetisierbare Kern ein Blechpaket ist, wobei das Blechpaket in den zuvor beschriebenen bevorzugten Varianten ausgeführt ist. Es kann sich aber auch um eine der anderen bevorzugten Ausgestaltungen handeln.

Bevorzugt ist ein erfindungsgemäßer elektrischer Leiter, auf dem im Bereich des Bereiches (i) oder der Bereiche (i) eine Gussform oder mehrere Gussformen so angeordnet ist oder sind, dass der oder die Bereiche (i) sowie sämtliche Kontaktbereiche im Inneren der Gussform liegen.

Wie weiter unten beschrieben wird, ist es möglich, den erfindungsgemäßen elektrischen Leiter mittels eines erfindungsgemäßen Verfahrens herzustellen, bei dem der Bereich (i) an den oder die Bereiche (ii) angegossen wird. Dadurch entsteht zwischen diesen Bereichen jeweils eine Kontaktfläche bzw. ein Kontaktbereich. In einer bevorzugten erfindungsgemäßen Form ist es dabei möglich, die Gussform so auszugestalten, dass sie auch nach dem Gießen auf dem erfindungsgemäßen Leiter verbleibt. Dann ist es besonders bevorzugt, dass die Gussform in der vorbeschriebenen Weise angeordnet ist.

Besondere Ausführungsformen der Gussform und besondere Eigenschaften der Gussform sind auch weiter unten beschrieben.

Bevorzugt ist ein erfindungsgemäßer elektrischer Leiter, wobei sich die Zusammensetzung des Materials des Bereiches (i) von der des Bereiches (ii) zu ≥ 2 Gew-%, bevorzugt ≥ 5 Gew-% besonders bevorzugt ≥ 10 Gew-% bezogen auf die im jeweiligen Bereich vorhandenen Atome unterscheidet.

Alternativ oder zusätzlich bevorzugt ist ein erfindungsgemäßer elektrischer Leiter, wobei sich die Zusammensetzung des Materials des Bereiches (i) von der des Bereiches (ii) zu ≥ 10 Atom-%, bevorzugt ≥ 20 Atom-% bezogen auf die im jeweiligen Bereich vorhandenen Atome unterscheidet.

Durch den Einsatz voneinander abweichender Materialien ist es möglich, die verschiedenen Bereiche (i) und (ii) hinsichtlich ihrer Leitfähigkeit aneinander anzupassen. Dies kann zum Beispiel dann sinnvoll sein, wenn im Falle gleicher Zusammensetzung der Bereich (i) und (ii) aufgrund des für den Bereich (i) angewendeten Herstellungsverfahrens (oder der entsprechenden Materialbeschaffenheit), das heißt zum Beispiel aufgrund der vorhandenen Porosität, sich ein höherer Widerstand ergibt. Dies kann ausgeglichen werden, indem ein Material für den Bereich in (i) gewählt wird, das per se über eine höhere Leitfähigkeit verfügt.

Aufgrund des für die Bereiche (ii) des Leiters im Blechpaket begrenzt zur Verfügung stehenden Bauraums sind bevorzugt aufgrund der guten elektrischen Leitfähigkeiten Reinstmaterialien zu verwenden. Diese lassen sich aufgrund des Erstarrungspunktes allerdings nur schlecht gießtechnisch für die Bereiche (i) verwenden. Daher werden für die Bereiche (i) bevorzugt Gusslegierungen verwendet, die einen Erstarrungsbereich aufweisen, so ein Nachpressen beim Druckgussprozess ermöglichen und so zu vergleichsweise geringer Porosität führen.

Teil der Erfindung ist auch, dass der erfindungsgemäße Leiter in einem Stator, Rotor, einer Drossel, einem Transformator oder einer Spule Bestandteil ist.

Nur der Vollständigkeit halber sei darauf hingewiesen, dass im Sinne der vorliegenden Erfindung eine Spule ein Leiter mit einer Induktivität ist, , wobei mindestens eine Windung vorhanden ist, die die Bedingungen "umlaufend einen Kern" erfüllen kann, wenn ein Kern innerhalb dieser Windung vorhanden ist. Damit die Spule eine magnetische Kraftwirkung entfalten kann, muss sie stromduchflossen sein. Daher besitzt eine Spule im Sinne der vorliegenden Erfindung stets zwei Kontaktstellen, die an eine Stromversorgung angeschlossen werden können bzw. angeschlossen sind. Bevorzugt ist im Sinne der vorliegenden Erfindung, dass eine Spule nicht kurzgeschlossen ist. Besonders bevorzugt ist der erfindungsgemäße elektrische Leiter Bestandteil eines Rotors oder eines Stators, wobei weiter bevorzugt an allen Zähnen jeweils eine Gussform oder zwei Gussformen vorhanden sind, wie hier als bevorzugt beschrieben.

Dabei ist ein erfindungsgemäßer Rotor oder Stator besonders bevorzugt, umfassend zwei Gussformen, die einander gegenüberliegend angeordnet sind, so dass jede Gussform einen Teil des Leiters an jedem Zahn überdeckt, wobei die beiden Gussformen so angeordnet sind, dass die Bereiche (i) sowie sämtliche Kontaktbereiche im Inneren der Gussformen liegen.

Bevorzugt wird im Schritt a) des erfindungsgemäßen Verfahrens einer oder mehrere der oben als bevorzugt beschriebenen magnetisierbaren Kerne bereitgestellt.

Alternativ oder zusätzlich bevorzugt wird in Schritt b) eines der hier in diesem Text als bevorzugt beschriebenen Materialien für die Bereiche (ii) bereitgestellt.

Bevorzugt erfolgt das Anbringen der Leiterabschnitte an dem magnetisierbaren Kern oder an den magnetisierbaren Kernen (Schritt c) durch Aufstecken. Dazu wird der Fachmann eine geeignete Form für die Leiterabschnitte, für den Bereich (ii) wählen. Um eine möglichst gute Raumausnutzung zu erzielen, kann es bevorzugt sein, die Leiterabschnitte zum Aufstecken zu erwärmen, sodass beim Abkühlen ein Zusammenziehen dafür sorgt, dass die Leiterabschnitte möglichst eng an dem magnetisierbaren Kern anliegen. Dabei ist es grundsätzlich bevorzugt, dass die Leiterabschnitte für den Bereich (ii) bereits über eine Isolierschicht verfügen, die die Leiter nach außen hin elektrisch isoliert.

Erfindungsgemäß bevorzugt ist, dass die in Schritt b) bereitgestellten Leiterabschnitte wenigstens teilweise, bevorzugt aber in der Mehrzahl U-förmig sind.

U-förmig im Sinne der vorliegenden Erfindung bedeutet, dass der Leiter so geformt ist, dass dessen Konturen auf eine Ebene projiziert eine U-Form ausbilden, wobei die Ecken der U-Form abgerundet sein können, nicht aber müssen. In dieser Projektion sind zwei Schenkel parallel zueinander ausgerichtet und diese Schenkel sind mit einem Mittelstück verbunden. Die beiden freien Enden der Schenkel liegen gegenüber dem Mittelstück (in der Projektion). Grundsätzlich ist es möglich, dass der Leiterabschnitt aus Material für den Bereich (ii) so ausgestaltet ist, dass die Streckenabschnitte des U-Formteils nicht genau in einer Ebene liegen. Diese Ausgestaltungsform ist sogar erfindungsgemäß bevorzugt, da die Leiterabschnitte (i) nach dem Gießen bevorzugt zwei verschiedene Leiterabschnitte aus Material für die Bereiche (ii) verbinden.

Der Querschnitt der Leiterabschnitte ist bevorzugt rechteckig, wobei weiter bevorzugt die Ecken abgerundet sind, bevorzugt ist der Krümmungsradius der Abrundung der Ecken ≥ 0,1 mm, weiter bevorzugt ≥ 0,2 mm, weiter bevorzugt 0,5 mm, weiter bevorzugt ≥ 1 mm.

Alternative bevorzugte Querschnitte der Leiterabschnitte sind rund oder oval.

Bevorzugt ist ein erfindungsgemäßes Verfahren, wobei die Leiterabschnitte in Schritt c) (die aus Material für die Bereiche (ii)) abwechselnd aus entgegengesetzter Richtung angebracht (angeordnet) werden.

Auf diese Weise ist das erfindungsgemäße Verfahren besonders effektiv gut durchführbar, weil so auf beiden Seiten des entstehenden elektrischen Bauteils bzw. des Gesamtleiters zum Beispiel in Form einer Spule eine Gussform angebracht werden kann, bei der die Leiterabschnittenden so in die Gussform hereinragen, dass jeweils die Leiterabschnitte für zwei verschiedene Bereiche (ii) durch einen Leiterabschnitt aus Material für den Bereich (i) verbunden werden, sodass ein Gesamtleiter entsteht.

Erfindungsgemäß weiter bevorzugt ist ein erfindungsgemäßes Verfahren, wobei neben den U-förmigen Leiterabschnitten auch I-förmige Leiterabschnitte für die Bereiche (ii) in Schritt b) bereitgestellt und Schritt c) angebracht werden.

Diese I-förmigen Leiterabschnitte sind besonders geeignet, an den beiden Enden des durch das in Schritt g) des erfindungsgemäßen Verfahrens vorzunehmenden Gießen entstehenden Leiters Kontaktierungsstellen zu dienen.

I-förmig im Sinne der vorliegenden Erfindung bezeichnet dabei die projizierte Fläche des Leiterabschnittes (für den Bereich (ii)), welche eine I-Form aufweist, wobei nicht alle Streckenabschnitte des I-Formteils in einer Ebene liegen müssen. Somit kann der I-förmige Leiterabschnitt auch gebogen vorliegen oder abgeknickt vorliegen.

Es kann erfindungsgemäß bevorzugt sein, dass das Material für die Bereiche (i) und (ii) aus unterschiedlichen Grundmaterialien besteht, wie zum Beispiel aus Kupfer und Aluminium. Auf diese Art ist es möglich, ein besonders geeignetes gießfähiges Material für die Leiterabschnitte (i) bereitzustellen und/oder den durch das Gießen tendenziell höheren Widerstand des Leitermaterials durch geeignete Materialauswahl auszugleichen.

Aus Gründen der Handhabung kann es aber auch bevorzugt sein, dass das Material für die Bereiche (i) und (ii) das gleiche Grundmaterial, zum Beispiel die gleiche Legierung, ist, wobei sich das Material des Bereichs (i) dann lediglich aufgrund der Eigenschaften, die durch den Gussprozess gegenüber dem Herstellungsprozess für das Material des Bereiches (ii) bedingt sind, unterscheiden.

Wie bereits weiter oben beschrieben, ist es erfindungsgemäß bevorzugt, dass die Leiterabschnitte für die Bereiche (ii) aus nicht gegossenen Materialien bestehen, zum Beispiel solche, die durch Stanzen, Laserschneiden, Wasserstrahlschneiden, Biegen in Form gebracht wurden, wobei Walzware, stranggepresste und/oder extrudierte Formteile, gesinterte Formteile aus Metall-Injection-Moulding oder lasergesinterte Formteile besonders bevorzugt sind.

Wie bereits oben angedeutet, ist es bevorzugt, dass geeignete Leiterabschnitte für die Durchführung des erfindungsgemäßen Verfahrens an dem magnetisierbaren Kern angeordnet werden. Dabei ist es bevorzugt, dass die Kontaktstellen der Leiterabschnitte (an denen die Verbindung erfolgen soll) aus dem Blechpaket bevorzugt senkrecht herausgeführt werden.

Bevorzugt werden die Kontaktstellen von gegebenenfalls vorhandenen Isolationsbeschichtungen oder isolierend wirkenden Oxidschichten (größtenteils) befreit. Weiterhin soll damit gewährleistet werden, dass eine stoffschlüssige und elektrisch leitfähige Verbindung ermöglicht wird.

Auf das Blechpaket (magnetisierbarer Kern) wird ein bevorzugt keramisches Formteil mit guten elektrischen Isolationseigenschaften und ausreichender Temperaturstabilität aufgesteckt. Dieses keramische Formteil bildet die Negativform der herzustellenden gegossenen Bereiche (i). Die herausgeführten Kontaktstellen (zum Beispiel der Spulenelemente, Spulenabschnitte oder ganzen Spulen) ragen in diese Negativform (Gussform) hinein. Die Kontaktstellen für die Betriebsspannung am Kontaktierungskopf/Spule werden bevorzugt für den zweiten Verfahrensschritt temporär durch eine Keramik oder einen Schlicker abgedeckt.

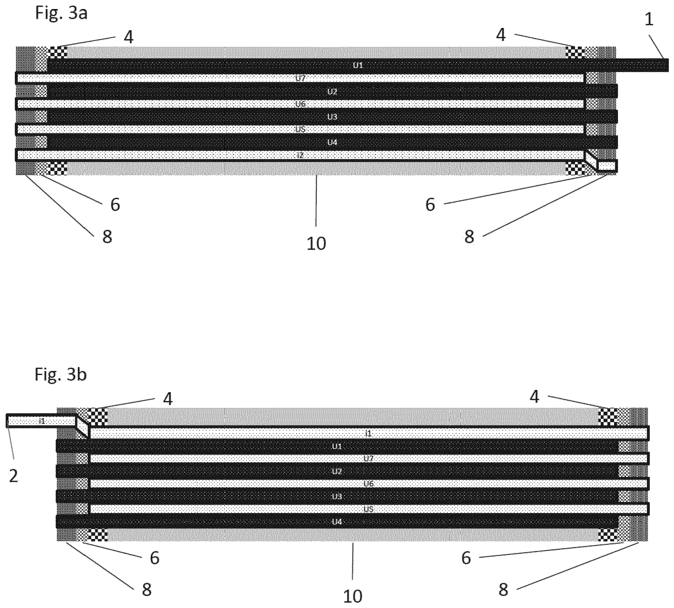

Besonders bevorzugt ist es, vor und / oder gleichzeitig und/oder nach dem Aufstecken des Formteils die Bereiche, die mit Luft gefüllt sind (siehe 4, Figur 3a, 3b), vorher mit einer Vergussmasse, bevorzugt elektrisch isolierenden Vergussmasse, zu kompaktieren und idealerweise Spalten, die sich zwischen Leiterenden und Formteil zwangsläufig bilden (um die Kontaktierungsenden einschieben zu können, müssen die Aussparungen des Formteils etwas größer sein als die Querschnitte der Kontaktierungsenden). Mit der Vergussmasse kann einerseits die elektrische Isolation der Leiterenden (vergleiche Bezugszeichen 4 Fig. 3a, 3b), gewährleistet, dem System in dem Bereich mechanische Stabilität verliehen und besonders das Formteil zu den Kontaktierungsenden abgedichtet werden. Damit wird gewährleistet, dass beim nachfolgenden (Druck-) Gussprozess keine Schmelze zwischen Formteil und Kontaktierungsenden eindringen kann. Würde dies der Fall sein, wäre die Gefahr eines ungewollten Kurzschlusses zwischen einzelnen Leiterabschnitten die Folge.

Das die Negativform der herzustellenden gegossenen Bereiche (i) bildende Formteil ist deswegen besonders bevorzugt aus einem Material mit elektrischen Isolationseigenschaften gefertigt, weil das Formteil gleichzeitig die elektrische Isolation und Schutz vor Medieneinfluss, z.B. Korrosion oder chemischem Angriff, von mindestens Bereichen der zu gießenden Bereiche (i) übernehmen kann. Im Allgemeinen liegen Bereiche der gegossenen Leiterabschnitte (i) frei (Anguss und Entlüftung), diese werden nach Nachbearbeitung bevorzugt mit einer Isolationsbeschichtung und / oder Vergussmasse und / oder Tränkharz versehen.

Dann wird die Negativform mit einem metallischen Werkstoff in schmelzflüssiger Phase gefüllt. Bevorzugt handelt es sich bei dem Material um ein aluminium- und oder kupferhaltiges Material, besonders bevorzugt Rotorenaluminium (AI 99,7 Gew.-%). Hierdurch werden gleichzeitig einerseits eine Vielzahl elektrischer Leiter ausgebildet und andererseits die zur Verschaltung der Spulenelemente, Spulenabschnitte oder ganzen Spulen notwendigen Verbindungen hergestellt.

In einem weiteren bevorzugten Schritt wird der Anguss und gegebenenfalls vorhandene Grate bevorzugt mittels Schleifverfahren entfernt.

In einem weiteren bevorzugten Schritt wird die entstehende freiliegende Fläche der gegossenen Leiterabschnitte (Bereiche) mit einer Isolationsbeschichtung, zum Beispiel einem isolierenden Imprägnierharz oder einem Isolationslack beschichtet.

Weiterhin können die Kontaktstellen für die Betriebsspannung durch die Entfernung der temporären Schutzkeramiken oder Schlicker freigelegt werden.

Als Vorbehandlung der Kontaktierungsstellen werden zur Entschichtung und Entfernung von Isolationsschichten, Oxidschichten, Kontaminationen oder Ähnliches bevorzugt spanende Verfahren wie Strahl-, Schleif- oder Bürstverfahren oder Laserverfahren eingesetzt. Laserverfahren sind hier weiter bevorzugt, weil sie neben der Entschichtung ebenfalls die gezielte Aufrauhung und damit beim Gießen den Formschluss und / oder Stoffschluss und elektrische Verbindung sogar von Aluminium-basierten Leitern ermöglichen.

Alternativ bevorzugt ist die Beschichtung der Kontaktierungsstellen mit einer plasmapolymeren Beschichtung auf aCH-Basis (siehe z.B. deutsche Patentanmeldung mit dem Aktenzeichen DE2018120616592100). Diese Beschichtung ermöglicht die Ausbildung einer Diffusionsbarriere zwischen zwei Materialien (zum Beispiel Cu-Stäbe zu verbinden mit Al-Rotorenaluminiumguss) und verhindert so die Legierungsbildung (Cu/Al).

Als keramisches Formteil (Gussteil), das gleichzeitig die Kavität und Form der herzustellenden Leiter definiert, kommen bevorzugt Porzellan, Steatit, SiOz- und Al₂O₃-basierte Keramiken und Gläser, oder Komposite in Frage. Weiter bevorzugt weisen die Keramiken eine hohe Bruchzähigkeit auf.

Insbesondere für die Herstellung von Spulen und/oder Leitern für Rotoren oder Statoren werden die Leiterabschnitte für die Bereiche (ii) bevorzugt durch Stanzen erzeugt. Die Stanzkanten werden bevorzugt durch Pressen und/ oder Schleifen verrundet. Durch die Wahl des zu stanzenden Blechs, insbesondere der Dicke des Blechs und die Breite der Leiterstege können die Spulenabschnitte der Nut angepasst werden (Querschnittsanpassung). Dadurch sind sehr große Freiheiten bei einer Motorauslegung möglich.

Das Anordnen der Leiterabschnitte in das Blechpaket geschieht bevorzugt von beiden Seiten. Bevorzugt ist eine Synchronisation des Steckens und geschieht von innen (rotornah) nach außen (nahe dem Motormantel). Zum Schluss werden bevorzugt bei der letzten Windung die Leiterabschnitte in Richtung Statormitte von außen angepresst (durch gezielte Aussparungen des Blechpakets). Damit wird eine gute Wärmeleitung in das Blechpaket gewährleistet.

Alternativ bevorzugt kann es sein, zwischen den einzelnen Spulenelementen und Spulenabschnitten einen definierten Spalt zu lassen, so dass die einzelnen Leiterabschnitte in dem Blechpaket nicht in Kontakt kommen und von einem Kühlmedium, bevorzugt einem Thermalöl, umflossen werden. So kann effektiv freiwerdende Wärme am Entstehungsort gezielt abgeführt werden.

Alternativ bevorzugt kann es sein, dass das Einstecken (gerade bei nicht keilförmigen Nutgeometrien, sondern Nutgeometrien mit parallelen Nutwänden) geschieht, wenn Blechpaket und Leiterabschnitte nicht die gleiche Temperatur aufweisen.

Mit Sorgfalt hat der Fachmann die Entschichtung und Vorbehandlung der Kontaktierungsstellen durchzuführen. Einerseits muss die Isolationsschicht sicher entfernt werden, andererseits muss sichergestellt werden, dass der nachfolgende Gießprozess zu einer stoffschlüssigen oder formschlüssigen und elektrisch leitfähigen Verbindung führt. Bei der Verbindung Kupfer mit Aluminiumschmelze ist dies vergleichsweise einfach möglich. Bei der Verbindung von Aluminiumformteilen, bevorzugt aus Rotorenaluminium mit Aluminiumschmelze (typische Al-Gusslegierung) ist die Verbindung durch das stoffschlüssige Zinkatverfahren möglich. Mit dem Zinkatverfahren (vergleiche z.B.: Körner, C. et.al.; Journal of Materials Processing Technology 214, 2014 oder M. Schwankl, "Al-Al-Verbundguss - Technologische Grundlagen und werkstoffkundliche Charakterisierung der stofflichen Anbindung von Aluminiumknetlegierungen im Aluminium-Druckguss," Friedrich-Alexander-Universität Erlangen-Nürnberg, Dissertation 2016, FAU University Press, Erlangen, ISBN 978-3-96147-048-8.), werden die Kontaktierungsstellen mit einer Zinkschicht überzogen, was die stoffschlüssige und elektrische Verbindung von zu den gegossenen Aluminiumkontaktierungen fördert.

Alternativ ist eine Laserbehandlung der Kontaktierungsstellen möglich. Dabei wird die Oberfläche durch den Laser stark strukturiert. Diese Strukturierung dient der Vergrößerung der Grenzfläche für eine verbesserte Kontaktierung im Guss. Diese feinen Strukturen, ohne an eine Theorie gebunden zu sein, werden beim Gussprozess geschmolzen, eine entstehende Oxidschicht wird durch die Schmelze weggeschwemmt, so dass eine Verbindung mit geringen elektrischen Widerständen entsteht.

Bei komplexer Leiterführung im Motor kann es notwendig werden, dass nach Gießen der Verbindungsleitungen in einem ersten Keramikformteil weitere Kontaktierungsstellen, die aus der erstem ersten Keramikformteil herausragen, durch ein zweites Keramikformteil hindurchgeführt und in einer zweiten Ebene analog verbunden werden. Durch diese Technik werden sehr komplexe Verschaltungen erst möglich.

Alternativ zum klassischen Vergussschritt mit klassischer Gussform ist auch ein Keramikspritzguss mit niedertemperatursinternden Keramiksystemen oder ein Spritzguss eines chemisch abbindenden anorganischen Materials, bevorzugt Phosphate und Sulfate, oder ein Salzguss, zum Beispiel mit einer Zusammensetzung aus 65 Gew.-% Na₂CO₃ und 35 Gew.-% KCI zur Erstellung der Form möglich. Diese Form kann selbstverständlich nach Guss der Bereiche (i) entfernt werden. Bevorzugt sind hierfür Formen aus Salz, die unter Einsatz von Wasser entfernt werden können. Alternativ bevorzugt sind Formen aus Sulfaten, bei denen das Kristallwasser durch Wärme entzogen wird und so ihre Kohäsion verlieren und leicht mechanisch entfernt werden können.

Werden diese Formen nach Guss entfernt, ist es bevorzugt, die gegossenen Bereiche (i) des Leiters mit einer Isolationsschicht zu versehen.

Weiter oben wurde beschrieben, dass eine bevorzugte Variante das beidseitige Einstecken von insbesondere U-förmigen Leiterabschnitten im Schritt c) des erfindungsgemäßen Verfahrens ist. Grundsätzlich ist es aber auch möglich, insbesondere, wenn in dem zu erstellenden elektrischen Bauteil genügend Platz ist, die U-förmigen Leiter auch nur von einer Seite einzustecken. In diesem Falle ist auch nur eine Gussform notwendig, um den erfindungsgemäßen Leiter zu erstellen.

Ein bevorzugtes Druckgussverfahren ist der Aluminiumdruckguss, bei dem die Einspritzpunkte (Anguss) bei den Kontaktierungsenden der bevorzugten U- und gegebenenfalls I-Leiter liegen. Dies führt zu einem starken Anströmen der Kontaktierungsstellen und zu einer besseren Verbindung. Bevorzugt ist dabei oder auch grundsätzlich, eine Entlüftung in der Mitte des zu gießenden Bereiches (i) vorzusehen. Es kann aber je nach entstehender Leitergeometrie auch bevorzugt sein, die Entlüftung an einer anderen Stelle in der Gussform zu gestalten.

Erfindungsgemäß bevorzugt ist es, dass die Kontaktierungsenden der Leiterabschnitte aus Material für die Bereiche (ii) einfach, weiter bevorzugt zweifach gefast sind, insbesondere in Richtung der Leiterdicke und Richtung der Leiterhöhe. Die Fase wird bevorzugt linear ausgeführt, d.h. die zweidimensionalen Projektionen der Fase ergeben eine Gerade. Das Anfasen kann bevorzugt durch Pressen und Stanzen geschehen. Alternativ bevorzugt kann das Anfasen der Kontaktierungsenden durch spanende Verfahren, insbesondere Fräsen geschehen. Die Fase führt zu einer größeren Oberfläche der Kontaktstelle zwischen Bereichen (i) und Bereichen (ii). Weiterhin ermöglicht die Fase, insbesondere wenn die Fase bevorzugt vor dem Einstecken in das Elektroblech erzeugt wird, ein besseres Einfädeln in die Aussparung der Gussform.

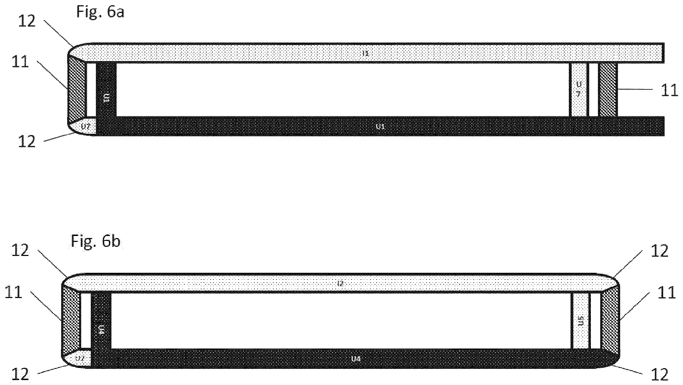

Erfindungsgemäß bevorzugt ist es, dass die Kontaktierungsenden viertelkreis- bzw. viertelellipsenförmig ausgeschnitten sind (12, Abb. 6a und 6b). Hierbei liegt der Kreismittelpunkt bevorzugt auf der Seite des zu gießenden Bereiches (i). Dadurch wird bewirkt, dass zwei nicht gegossene Kontaktierungsenden von zwei unmittelbar aneinanderliegenden Bereichen (ii) voneinander isoliert werden können und nicht durch gegossene Bereiche (i) ungewollt miteinander kontaktiert werden. Dies gilt z. B. wenn zwei benachbarte Spulen (z. B. für zwei benachbarte Zähne eines Stators) eng beieinander liegen und die beiden Spulenköpfe gleichzeitig mit nur einer Keramik gegossen werden: Zwei derart geformte, aneinanderliegende Kontaktierungsenden bilden so einen Spalt aus, der mit einem Isolationsmaterial, bevorzugt mit dem Keramikformteil oder einer Vergussmasse ausgefüllt ist.

Bevorzugte Gusstechnologien für das erfindungsgemäße Verfahren sind Druckguss, Niederdruckguss, Squeeze-Casting und Schwerkraftguss.

Bevorzugt ist, dass durch das erfindungsgemäße Verfahren Leiter entstehen, die sich durch verteilte Wicklungen über mehr als einen Zahn zum Beispiel eines Rotors oder Stators erstrecken. Dies ist insbesondere dadurch leicht erreichbar, indem eine geeignete Gussform verwendet wird, die so ausgestaltet ist, dass die entstehenden Bereiche (i) wenigstens teilweise zwei Leiterabschnitte als Bereiche (ii) verbinden, die auf verschiedenen Zähnen angeordnet sind. Dadurch entstehen die verteilten Wicklungen, die sich über mehr als einen Zahn erstrecken. Grundsätzlich ist es dabei möglich, durch eine geeignete Gussform sicher komplizierte Leitungsgeometrien zu gewährleisten.

Bevorzugt ist die Gussform ein segmentiertes Keramikformteil, das zusammen den Guss der Leiterabschnitte für die Bereiche (i) für einen gesamten Stator oder Rotor ermöglicht. Bevorzugt bildet ein Segment des Keramikformteils nach Guss die Bereiche (i) für eine Zahnspule eines Zahns aus. Gegenüberliegend ist ein Segment eines weiteren Keramikformteils vorhanden, das nach Guss der gegenüberliegenden Bereiche (i) die Zahnspule komplettiert. Die Anzahl der Zähne ist bevorzugt ein Vielfaches der Anzahl der Segmente weiter bevorzugt gleich der Anzahl der Segmente. Bevorzugt ist, dass für die Erstellung eines erfindungsgemäßen Rotors oder Stators auf beiden Seiten der Blechpakete jeweils nur eine Gussform eingesetzt wird, die bevorzugt eine Kreisgeometrie mit einer konzentrischen kreisförmigen Aussparung aufweist, wobei weiter bevorzugt wenigstens eine der Formen eine runde Geometrie aufweist, die mindestens auf einer Seite nicht größer ist als das Blechpaket, sodass die Form auch bei der Montage zum Beispiel in ein Motorgehäuse auf dem Stator verbleiben kann.

Bevorzugt werden für die Verschaltung der einzelnen Schleifen, Zahnspulen, Wicklungen und/oder verteilten Wicklungen Kontaktstellen aus einer Gussform herausgeführt. Nach Guss liegen so die Kontaktstellen frei vor und können für die Verschaltung genutzt werden. Bevorzugt werden diese Kontaktstellen nur aus einer Gussform herausgeführt, liegen daher nur auf einer Seite des Blechpakets vor. Die Verschaltung dieser Kontaktstellen kann konventionell mit Kontaktierungsschienen erfolgen. Bevorzugt ist, dass anstatt der Kontaktierungsschienen abermals eine Gussform auf die Kontaktstellen aufgesteckt wird und die Verschaltung durch den Guss weiterer gegossener Bereiche (ii) vorgenommen wird.

Der Einsatz von nur zwei Formen zur Bildung aller Spulenköpfe eines Stators und einer weiteren Form zur Verschaltung führt zu einer hohen Verfahrenssicherheit.

Nachfolgend wird die Erfindung näher anhand von Figuren und einem Beispiel erläutert.

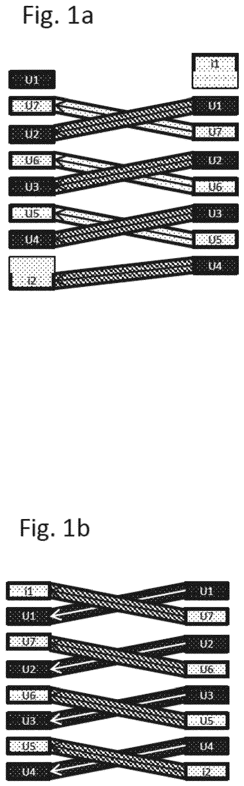

Die Figur 1a stellt schematisch einen frontseitigen Kontaktierungskopf und die Figur 1b einen rückseitigen Kontaktierungskopf eines erfindungsgemäßen Leiters dar, der für eine Spule geeignet ist. Der Spulenkern selbst ist nicht dargestellt. Die mit U bezeichneten Bauteile stellen jeweils U-Leiterstücke dar, die mit I bezeichneten Bauteile jeweils I-Leiterstücke. Zu beachten ist, dass aus Darstellungsgründen die einzelnen Leiter voneinander beabstandet dargestellt worden sind. Im Anwendungsfall einer Spule würden diese Leiter - nur durch die Isolierung getrennt - direkt aufeinanderliegen. Dabei ist zu erkennen, dass an der Frontseite die I-Leiterstücke breiter sind, was daran liegt, dass diese zum einen aus der Ebene der Spule herausragen und zum anderen einer Biegung unterzogen wurden. Die mit einem Pfeil markierten Bereiche zeigen die erfindungsgemäß vorzusehenden gegossenen Leiterabschnitte. Es ist deutlich zu erkennen, dass mit jedem gegossenen Leiterabschnitt zwei verschiedene U-Leiterabschnitte verbunden werden, wodurch insgesamt ein Leiter entsteht, der eine Spule bilden kann.

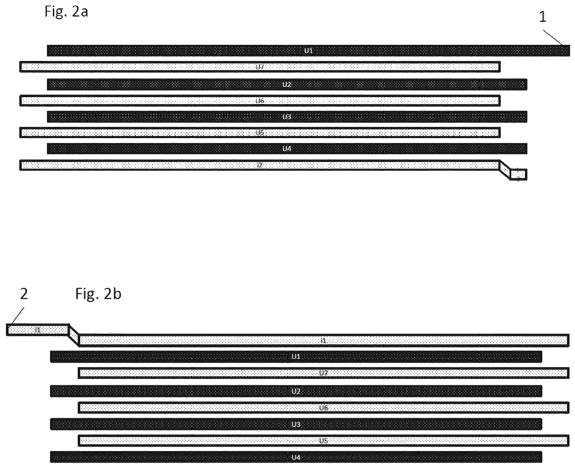

Die Figur 2a stellt schematisch eine Seitenansicht der aufgesteckten U-Formteile (Leiterabschnitte) und I-Formteile (Leiterabschnitte) dar. Die Figur 2b stellt den gleichen Leiterabschnittstapel von der anderen Seite dar. Die jeweiligen U- und I-Leiterabschnitte sind entsprechend bezeichnet. Auch hier sind aus darstellerischen Gründen die einzelnen Leiter von einander beabstandet dargestellt. Das Bezugszeichen 1 stellt die Kontaktstelle 1 dar, die Teil des (verlängerten) Leiterabschnittes U1 ist, das Bezugszeichen 2 stellt die Kontaktstelle 2 dar.

Die Figuren 3a und 3b stellen schematisch das gleiche Leiterabschnittspaket eingeführt in die jeweiligen Gussformen (Keramiken) unter Berücksichtigung der Vergussmassen dar. Es handelt sich bei der Darstellung um einen Schnitt durch die Gussformen in den Ebenen der vorderen und hinteren Leiter. Zu beachten ist, dass in den Figuren 3a und 3b abweichend von den Figuren 2a und 2b die einzelnen Leiter nicht beanstandet zu einander dargestellt sind. Dabei bedeuten die Bezugszeichen
1: Die Kontaktstelle 1, die Teil des (verlängerten) Leiterabschnittes U1 ist,
2. Die Kontaktstelle 2,
4: Vergussmasse,
6: Keramikboden,
8: Keramiksteg,
10: Blechpaket.

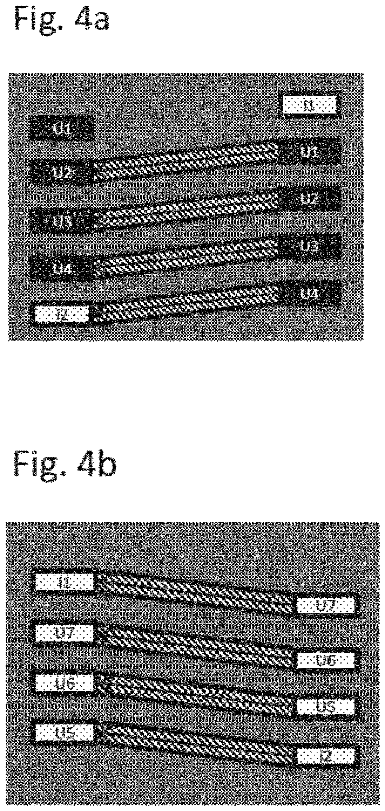

Die Figur 4 stellt schematisch das keramische Formteil für die Frontseite (Figur 4a) und für die Rückseite (Figur 4b) für den Leiterabschnittstapel aus der Figur 2 dar. Dabei sind die mit I und U bezeichneten Rechtecke die Bereiche, in die die Enden der jeweiligen U- und I-Stücke eingefügt werden. Die mit den Pfeilen gekennzeichneten Bereiche sind die Kavitäten, in die das Material für die gegossenen Leiterabschnitte eingeführt werden soll. Die die jeweiligen Kontaktierungsstellen sind mit U1 und I1 bezeichnet.

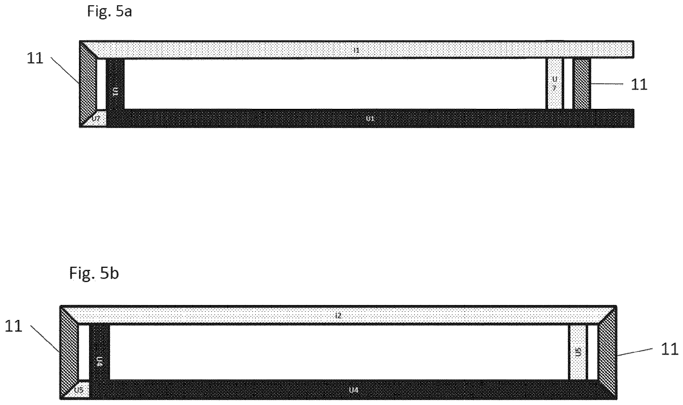

Die Figur 5 stellt eine schematische Ansicht des erfindungsgemäßen Leiters von oben (Figur 5a) und von unten (Figur 5b) dar. Dabei sind die gegossenen Leiterabschnitte (11) schraffiert dargestellt. Es ist deutlich zu erkennen, dass die U- und I-Leiterabschnitte so angeordnet sind, dass genügend Platz ist, die jeweiligen gegossenen Leiterabschnitte zu gießen. Die gegossenen Leiterabschnitte ragen über die nicht-gegossenen Leiterabschnitte auf der jeweiligen gleichen Seite hinaus. Das Blechpaket ist nicht dargestellt. Das Bezugszeichen 11 bezeichnet die gegossenen Leiterabschnitte.

Die Figur 6a und 6b stellt schematisch die gleiche Anordnung wie in den Figuren 5a und 5b dar. Allerdings sind hier die U-Leiter anders ausgestaltet, in den eliptisch abgerundete Leiter vorgesehen wurden. Die Bezugszeichen bedeuten:
11: Gegossene Leiterabschnitte,
12: Eleptisch abgerundete Leiter enden.

### Beispiele

### Messbeispiel 1

### Messung der Porosität mittels µ-CT-Analyse

Ein gegossener Leiterabschnitt (Dicke 2 mm) wird mit dem Gerät SKYSCAN 1272 der Fa. Bruker durchstrahlt. Beschleunigungsspannung 30 kV, laterale Auflösung: 1µm. Durchführung der Messung im Genius-Mode, bei dem die Messparameter automatisch optimiert werden.

Die 3D-Rekonstruktion und Berechnung der Porosität findet mit der Software InstaRecon der Fa. Bruker statt. Für die Porosität werden alle Volumenelemente berücksichtigt, die vollständig von dem Metall umgeben sind. Somit gehen in die Bestimmung der Porosität Rauigkeiten und Fehler in der Oberfläche nicht ein.

Die Messung der Porosität wird an 5 Stellen der gegossenen Bereiche (i) durchgeführt und der Mittelwert und die Standardabweichung der Porosität berechnet.

### Ausführungsbeispiel 1:

Sieben U-förmige Flachleiter wurden aus Aluminium 99,5 (EN AW-1050A) (Lieferant Fix-Metall GmbH) aus einem 2 mm dicken Blech ausgestanzt. Breite der U-Stege waren 5mm, Länge der Stege: 120 mm, der Innenabstand der Stege: 16 mm. Ein U-Formteil besaß einen um 20 mm verlängerten Steg (Kontaktstelle 1). Zwei weitere I-förmige Flachleiter wurden ebenfalls ausgestanzt: Maße 140 mm × 5 mm × 2 mm. Ein I-Leiter wurde ebenfalls um 20 mm verlängert ausgeführt (Kontaktstelle 2). Die Stanzkanten wurden durch Schleifen verrundet und wiesen einen Krümmungsradius von 0,5 mm auf.

Die Enden der Leiter wurden zur platzsparenden Kontaktierung angefast. Die beiden I-Leiter wurden an einem Ende wie in Figur 2a, I2 und Figur 2b I1 umgeformt, so dass sich ein Versatz um eine Leiterdicke ergab.

Diese U- und I-Formen wurden mittels Anodisation und Plasmapolymerisation beschichtet (weitere Informationen finden sich in der DE 10 2016 214 493 A1). Die Enden der U- und I-Formen wurden mittels Laser wie folgt entschichtet:
Laser: Q-switched CL 250 Nd : YAG (λ = 1064 nm) Laser mit Gauß-Profil der Clean-Lasersysteme GmbH mit 2D-Galvoscanner

Die Entschichtung der Oberfläche erfolgt mit dem gepulsten Nah-IR-Laser. Mit einer Fluenz von 0,55 J/cm² wird derart linienförmig scannend auf der Oberflächenverfahren, dass bei einer flächigen Behandlung mit Pulsen von 110 µm Durchmesser (1/e²) und einem Rasterabstand von 125 µm bei einer Pulsfolgefrequenz von 100 kHz ohne stationäre Pulswiederholung die Isolationsschicht im Bereich der Enden der U- und I-Formen entfernt werden. Die Oxidation der Oberfläche wird durch Verwendung eines Schutzgases, hier Stickstoff, welcher die Behandlungszone spült (40 I /min), reduziert. Die urspüngliche Topographie des Bleches z.B. Walzstrukturen bleiben trotz die Laserbehandlung erhalten.

Im Anschluss wurden die entschichteten Enden der U- und I-Formen wie folgt vorbehandelt:
**1.** Vorreinigung der Druckgusslegierung EN AW-1050A Al 99,5 % vorgereinigt mittels Siliziumcarbid F320 (Fa. ESK-SIC GmbH): 2 bar; anschließende Aceton - Ultraschallbadreinigung 3 min, 25 °C
**2.** Beizen 1 min 55 °C in 10 gew% NaOH
**3.** Beizen 1 min 40 gew% HNO3, Raumtemperatur
**4.** Tauchen 2 min in Zinkatbeize CNF 11 (NaOH + ZnO), Raumtemperatur
**5.** Beizen 1 min 40 gew% HNO3, Raumtemperatur
**6.** Tauchen 1 min in Zinkatbeize CNF 11, Raumtemperatur Nach den Schritten 1 bis 6 findet jeweils ein Spülschritt mit deionisiertem Wasser bei Raumtemperatur statt.

Die resultierende Beschichtungsdicke beträgt ca. 2 µm mit einer Bedeckungsdichte > 80%.

Diese Spulenabschnitte (U-Formteile und 2 I-Formteile) wurden wechselseitig in eine Nut eines entsprechenden Blechpakets eingeschoben, so dass auf der Vorderseite 8 Kontaktierungsstellen um 25 mm und zwei um 45 mm (Kontaktstellen für die Betriebsspannung) aus dem Blechpaket herausragten. Auf diese jeweils 10 Kontaktierungsstellen wurde ein Keramikformteil aus Hartporzellan (Pressporzellan C110 der Fa. Rauschert Steinbach GmbH) mit einer Dicke des Keramikbodens von 5 mm und Aussparungen für die Kontaktierungsstellen aufgesteckt. Weiterhin besitzt das Keramikformteil Stege mit einer Höhe von 10 mm und einer Breite von 1,9 mm (siehe Fig. 4a), so dass die daraus gebildeten Kavitäten eine Tiefe von 10 mm und eine Breite von 2,1 mm besitzen. Zwei der 10 Kontakte dienen der späteren Betriebsspannungsversorgung (U1 und I1 in der Figur 4). Diese Kontakte wurden vollflächig mit einer temporären Keramik bedeckt. Auf der Rückseite wurde ein 5 mm dickes Keramikformteil mit 8 Kontaktierungsstellen aufgesteckt (siehe Figur 4b). Dieses Keramikformteil besitzt ebenfalls Stege mit einer Höhe von 10 mm und einer Breite von 1,9 mm. Die Stege sind so positioniert, dass je zwei U-Abschnitte miteinander verbunden werden. An den letzten U-Formen werden die beiden ineinander verschlungenen Helices wiederum durch Verbindung mit dem I-Formteil (I2) an einer Stelle verbunden. Ein weiteres I-Formteil wird so verbunden, dass beide Kontakte der auf einer Seite der Zahnspule liegen.

Vor Aufstecken der Keramik-Formteile wurden die Kavitäten zwischen Elektroblech und den am Elektroblech anliegenden U-Formteilen mit einer Vergussmasse, hier Silikonvergussmasse Silcotherm SE3000 der Fa. ACC Silicones Ltd, UK vergossen. Nach Silikonverguss und Aufstecken der Keramik und Härtung der Vergussmasse wurde das Blechpaket samt U- und I-Formleiter und Keramiken auf beiden Seiten in eine Druckgusskavität eingelegt und die entstehenden Kavitäten der Isolierkeramik mit Aluminiumschmelze (Druckgusslegierung EN AC - 44300)) befüllt.

In diesem Ausführungsbeispiel (das Verfahren kann aber erfindungsgemäß allgemein bevorzugt sein) umfasst das Verfahren zum Befüllen der keramischen Formteile folgenden Schritte:
a) Öffnen des Formwerkzeuges und Entnehmen der im vorrangegangenen Gießzyklus hergestellten gegossenen 2 Kontaktierungsköpfe mitsamt dem Blechpaket, den gestanzten und durch verbundenen Leitern und den keramischen Formteilen (optional, bei mehreren Güssen hintereinander).
b) Reinigen der Kavität des Formwerkzeugs mit Druckluft (optional, bei mehreren Güssen hintereinander)
c) Einsprühen des Trennmittels in die Kavität des Formwerkzeugs mittels einer Sprühpistole (analog der typischen Vorgehensweise beim Auftragen eines Trennmittels) und Trocknen (optional)
d) Einlegen des Blechpakets mit eingesteckten U- und I-Formteilen und den aufgesteckten keramischen Formteilen in die Kavität
e) Gießvorgang, optional im Druckguss mit anschließendem Erstarrenlassen der Schmelze in der Kavität,
f) Öffnen des Formwerkzeugs und Entnehmen der auf beiden Seiten gegossenen 2 Kontaktierungsköpfe mitsamt dem Blechpaket, den gestanzten und nun verbundenen Leitern und den keramischen Formteilen.

Die Hinweise auf optionale Verfahrensschritte gelten für das bevorzugte, verallgemeinerte erfindungsgemäße Verfahren, im Beispiel wurden diese Verfahrensschritte durchgeführt.

Zum Druckguss wurde eine Kaltkammer Druckgussmaschine SC N66 des Herstellers Bühler mit folgenden Parameter verwendet: Druckgusslegierung: EN AC - 44300), Temperatur der Vorkammer: 760 °C, Gießkolbengeschwindigkeit mit v=2,6 m/s, Druck von p=750 bar, Verwendung einer Vakuumanlage

Der Gießvorgang e) unterteilt sich in 3 Phasen (optional):
1. Langsames Verfahren des Kolbens zur Füllung der Füllkammer bis zum Anguss
2. Einspritzen der Schmelze mit einer Kolbengeschwindigkeit 2,6 m/s bis zur Füllung der Kavität
3. 4 Sekunden lang Nachdrücken bei 75 MPa (750 bar)

Nach dem Erstarren und dem Öffnen des Werkzeugs wurde die Keramik von überstehenden Graten durch Schleifen befreit und schließlich mit der o.g. Silikonvergussmasse flächig beschichtet (1 mm).

Man erhält so eine Spule, die in dem Blechpaket verankert ist und ein Magnetfeld erzeugt, sobald man an den beiden frei verbliebenen Kontaktstellen 1 und 2 eine Spannung anlegt.

Die Leitfähigkeit des Leiters bestehend aus gegossenen und nicht gegossenen Bereichen beträgt 4,3 +- 0,2 mOhm

Die Porosität der 8 gegossenen Leiterabschnitte wurde nach Messbeispiel gemessen und beträgt 2,5 +- 0,3 %.

### Ausführungsbeispiel 2:

Wie im Ausführungsbeispiel 1 werden U- und I-Leiter verwendet, aber die Enden der U- und I-Leiter wie folgt vorbehandelt (Entschichtung und Strukturierung in einem Schritt):
Laser: Q-switched CL 250 Nd : YAG (λ = 1064 nm) Laser mit Flat-Top-Profil der Clean-Lasersysteme GmbH mit 2D-Galvoscanner

Die Entschichtung und Strukturierung der Oberfläche erfolgt mit dem gepulsten Nah-IR-Laser. Mit einer Fluenz von 11 J/cm² wird derart linienförmig scannend auf der Oberflächenverfahren, dass bei einer flächigen Behandlung mit Pulsen von 110 µm Durchmesser (1/e²) und einem Rasterabstand von 125 µm, bei wiederholter Anwendung von 20 stationären Pulsen bei einer Pulsfolgefrequenz von 100 kHz die Isolationsschicht entfernt und die Kontaktflächen lokal strukturiert werden. Die Oxidation der Oberfläche wird durch Verwendung eines Schutzgases, hier Stickstoff, welcher die Behandlungszone spült (40 l /min), reduziert. Durch die Laserbehandlungen ergeben sich lokale, topfförmige Vertiefungen mit einer mittleren Rautiefe von ca. Rz = 30 µm auf der Oberfläche.

Schließlich werden die in Ausführungsbeispiel genannten Verfahrensschritte durchgeführt. Man erhält so ebenfalls eine Spule, die in dem Blechpaket verankert ist und ein Magnetfeld erzeugt, sobald man an den beiden frei verbliebenen Kontaktstellen 1 und 2 eine Spannung anlegt.

Die Leitfähigkeit des Leiters bestehend aus gegossenen und nicht gegossenen Bereichen beträgt 4,6 +- 0,3 mOhm

Die Porosität der 8 gegossenen Leiterabschnitte wurde nach Messbeispiel gemessen und beträgt 2,8 +- 0,3 %.

### Ausführungsbeispiel 3:

Wie im Ausführungsbeispiel 2 werden U- und I-Leiter verwendet, aber die Enden der U- und I-Leiter wie folgt vorbehandelt (Entschichtung und Strukturierung in einem Schritt):
Laser: Q-switched CL 100 Nd : YAG (λ = 1064 nm) Laser mit Gauß-Profil der Clean-Lasersysteme GmbH mit 2D-Galvoscanner

Die Entschichtung und Strukturierung der Oberfläche erfolgt mit dem gepulsten Nah-IR-Laser. Mit einer Fluenz von 11 J/cm² wird derart linienförmig scannend auf der Oberflächenverfahren, dass bei einer flächigen Behandlung mit Pulsen von 110 µm Durchmesser (1/e²) und einem Linienrasterabstand von 200 µm und einem Überlapp der Fokusflächen im Vorschub von 50 % bei wiederholter Anwendung von 20 stationären Pulsen, innerhalb eines Scans, bei einer Pulsfolgefrequenz von 100 kHz die Isolationsschicht entfernt und die Kontaktflächen lokal strukturiert werden. Die Oxidation der Oberfläche wird durch Verwendung eines Schutzgases, hier Stickstoff, welcher die Behandlungszone spült (40 I /min), reduziert. Durch die Laserbehandlungen ergeben sich hinterschnittige vasenförmige Vertiefungen auf der Oberfläche. Die mittlere Rautiefe dieser Strukturen liegt bei Rz = 150 µm.

Schließlich werden die in Ausführungsbeispiel genannten Verfahrensschritte durchgeführt. Man erhält so ebenfalls eine Spule, die in dem Blechpaket verankert ist und ein Magnetfeld erzeugt, sobald man an den beiden frei verbliebenen Kontaktstellen 1 und 2 eine Spannung anlegt.

Die Leitfähigkeit des Leiters bestehend aus gegossenen und nicht gegossenen Bereichen beträgt 4,6 +- 0,3 mOhm

Die Porosität der 8 gegossenen Leiterabschnitte wurde nach Messbeispiel gemessen und beträgt 2,8 +- 0,3 %.

### Ausführungsbeispiel 4:

Wie im Ausführungsbeispiel 1 werden U- und I-Leiter verwendet, aber die Enden der U- und I-Leiter wie folgt vorbehandelt (Entschichtung und Strukturierung in einem Schritt):
Laser: Q-switched CL 100 Nd : YAG (λ = 1064 nm) Laser mit Gauß-Profil der Clean-Lasersysteme GmbH mit 2D-Galvoscanner

Die Entschichtung der Oberfläche erfolgt mit dem gepulsten Nah-IR-Laser. Mit einer Fluenz von 11 J/cm² wird derart linienförmig scannend auf der Oberflächenverfahren, dass in 3 Laserzyklen, bei einer flächigen Behandlung mit Pulsen von 110 µm Durchmesser (1/e²) und einem Rasterabstand von 30 µm bei einer Pulsfolgefrequenz von 100 kHz ohne stationäre Pulswiederholung die Isolationsschicht im Bereich der Enden der U- und I-Formen entfernt werden. Die Oxidation der Oberfläche wird durch Verwendung eines Schutzgases, hier Stickstoff, welcher die Behandlungszone spült (40 I /min), reduziert. Durch die Laserbehandlungen ergibt sich eine gereinigt und aufgeraute Oberfläche.

Schließlich werden die in Ausführungsbeispiel genannten Verfahrensschritte durchgeführt. Man erhält so ebenfalls eine Spule, die in dem Blechpaket verankert ist und ein Magnetfeld erzeugt, sobald man an den beiden frei verbliebenen Kontaktstellen 1 und 2 eine Spannung anlegt.

Die Leitfähigkeit des Leiters bestehend aus gegossenen und nicht gegossenen Bereichen beträgt 4,6 +- 0,3 mOhm

Die Porosität der 8 gegossenen Leiterabschnitte wurde nach Messbeispiel gemessen und beträgt 2,8 +- 0,3 %.

## Patentansprüche

1. Elektrischer Leiter, umlaufend einen magnetisierbaren Kern (10) oder mehrere magnetisierbare Kerne,
wobei der elektrische Leiter entlang des Umlaufes oder entlang mehrerer oder sämtlicher Umläufe wenigstens einen Bereich i) aus gegossenem oder durch Gießen erzeugbaren Material (11) umfasst, der über genau zwei Kontaktbereiche verfügt, die den Übergang zu einem Bereich ii) aus mit gegenüber dem gegossenen oder durch Gießen erzeugbaren Material des Bereiches i) verändertem Leitermaterial (U1, U2, U3, U4, U5, U6, U7, i1, i2) darstellen,
wobei auf dem elektrischen Leiter im Bereich des Bereiches i) oder der Bereiche i) eine Gussform oder mehrere Gussformen so angeordnet ist oder sind, dass der oder die Bereiche i) sowie sämtliche Kontaktbereiche im Inneren der Gussform liegen.

2. Elektrischer Leiter, umlaufend einen magnetisierbaren Kern (10) oder mehrere magnetisierbare Kerne, nach Anspruch 1, wobei der elektrische Leiter entlang des Umlaufes oder entlang mehrerer oder sämtlicher Umläufe
jeweils genau einen Bereich i) aus gegossenem oder durch Gießen erzeugbaren Material umfasst, der über zwei Kontaktbereiche verfügt, die den Übergang zu einem Bereich ii) aus mit gegenüber dem gegossenen oder durch Gießen erzeugbaren Material des Bereiches i) verändertem Leitermaterial darstellen oder
jeweils genau zwei Bereiche i) aus gegossenem oder durch Gießen erzeugbaren Material umfasst, die jeweils über zwei Kontaktbereiche verfügen, die den Übergang zu einem Bereich ii) aus mit gegenüber dem gegossenen oder durch Gießen erzeugbaren Material des Bereiches i) verändertem Leitermaterial darstellen.

3. Elektrischer Leiter, umlaufend einen magnetisierbaren Kern (10) oder mehrere magnetisierbare Kerne, nach Anspruch 1 oder 2, wobei der Bereich i) über eine größere Leiterquerschnittsfläche verfügt, als der Bereich ii).

4. Elektrischer Leiter, umlaufend einen magnetisierbaren Kern (10) oder mehrere magnetisierbare Kerne, nach einem der vorangehenden Ansprüche, wobei das Material des Bereiches ii) ein nicht-gegossenes und nicht durch Gießen erzeugbares Material ist, bevorzugt ausgewählt aus der Gruppe bestehend aus gezogenem Draht, geschnittenen Formteilen aus Walzware, stranggepressten Formteilen, extrudierten Formteilen, gesinterten Formteilen und gestanzten Halbzeugen oder Blechsegmenten.

5. Elektrischer Leiter, umlaufend einen magnetisierbaren Kern (10) oder mehrere magnetisierbare Kerne, nach einem der vorangehenden Ansprüche, wobei das Material des Bereiches i) und/oder das Material des Bereiches ii) aus Gold, Silber, Kupfer, Magnesium oder Aluminium oder deren Legierungen gegebenenfalls auch mit weiteren Elementen besteht.

6. Elektrischer Leiter, umlaufend einen magnetisierbaren Kern (10) oder mehrere magnetisierbare Kerne, nach einem der vorangehenden Ansprüche, wobei der magnetisierbare Kern (10)
- ein Spulenkern, insbesondere ein lamellierter Spulenkern, besonders bevorzugt ein Rotorblechpaket oder ein Statorblechpaket oder ein Teil davon oder
- ein Kern aus Vollmaterial, bevorzugt aus massivem Weicheisen oder
- ein Pulverkern, bevorzugt bestehend aus FeSi, NiFe, CoFe oder
- ein Ferritkern oder
- ein Hybridkern aus mit einer Isolationsschicht ummanteltem weichmagnetischem Material ist.

7. Elektrischer Leiter, umlaufend einen magnetisierbaren Kern (10) oder mehrere magnetisierbare Kerne, nach einem der vorangehenden Ansprüche, wobei sich die Zusammensetzung des Materials des Bereiches i) von der des Bereiches ii) zu ≥ 2 Gew-%, bevorzugt ≥ 5 Gew-% besonders bevorzugt ≥ 10 Gew-% bezogen auf die im jeweiligen Bereich vorhandenen Atome unterscheidet.

8. Stator, Rotor, Drossel, Transformator oder Spule, umfassend einen elektrischen Leiter, umlaufend einen magnetisierbaren Kern (10) oder mehrere magnetisierbare Kerne, nach einem der vorangehenden Ansprüche.

9. Verfahren zum Herstellen eines elektrischen Leiters, umlaufend einen magnetisierbaren Kern (10) oder mehrere magnetisierbare Kerne, nach einem der Ansprüche 1 bis 7, umfassend die Schritte:
a) Bereitstellen eines magnetisierbaren Kernes (10) oder mehrerer magnetisierbarer Kerne,
b) Bereitstellen von Leiterabschnitten aus Material für die Bereiche ii) wie in einem der Ansprüche 1 bis 7 definiert,
c) Anbringen der Leiterabschnitte an dem magnetisierbaren Kern (10) oder den magnetisierbaren Kernen,
d) Bereitstellen einer Gussform oder mehrerer Gussformen zum Erzeugen der Bereiche i),
e) Anordnen der Gussform oder der Gussformen so, dass die Mehrzahl der Leiterabschnittenden im Inneren der Gussform sind,
f) Bereitstellen von gießfähigem Material für die Bereiche i),
g) Gießen des gießfähigen Materials in die Gussform, so dass die entstehenden Bereiche i) jeweils zwei Leiterabschnitte als Bereiche ii) verbinden.

10. Verfahren nach Anspruch 9, wobei die Mehrzahl der in Schritt b) bereitgestellten Leiterabschnitte U-förmig (U1, U2, U3, U4, U5, U6, U7) ist.

11. Verfahren nach Anspruch 10, wobei die Leiterabschnitte in Schritt c) abwechselnd aus entgegengesetzter Richtung angebracht werden.

12. Verfahren nach einem der Ansprüche 10 bis 11, wobei neben den U-förmigem Leiterabschnitten (U1, U2, U3, U4, U5, U6, U7) auch I-förmige Leiterabschnitte (i1, i2) für Bereiche ii) in Schritt b) bereitgestellt und in Schritt c) angebracht werden.

## Claims

1. Electrical conductor, peripherally extending around a magnetizable core (10) or a plurality of magnetizable cores,
wherein the electrical conductor, along the peripheral extent or along a plurality or all of the peripheral extents, comprises at least one region i) composed of cast material (11), or material (11) producible by casting, said at least one region having exactly two contact regions which constitute the transition to a region ii) composed of conductor material (U1, U2, U3, U4, U5, U6, U7, i1, i2) which has been modified with respect to the cast material, or material producible by casting, of the region i),
wherein a casting mould or a plurality of casting moulds is or are arranged on the electrical conductor in the region of the region i) or regions i) in such a way that the region (s) i) and all of the contact regions lie in the interior of the casting mould.

2. Electrical conductor, peripherally extending around a magnetizable core (10) or a plurality of magnetizable cores, according to Claim 1, wherein the electrical conductor, along the peripheral extent or along a plurality or all of the peripheral extents,
comprises in each case exactly one region i) composed of cast material, or material producible by casting, said region having two contact regions which constitute the transition to a region ii) composed of conductor material which has been modified with respect to the cast material, or material producible by casting, of the region i), or
comprises in each case exactly two regions i) composed of cast material, or material producible by casting, said regions each having two contact regions which constitute the transition to a region ii) composed of conductor material which has been modified with respect to the cast material, or material producible by casting, of the region i) .

3. Electrical conductor, peripherally extending around a magnetizable core (10) or a plurality of magnetizable cores, according to Claim 1 or 2, wherein the region i) has a larger conductor cross-sectional area than the region ii).

4. Electrical conductor, peripherally extending around a magnetizable core (10) or a plurality of magnetizable cores, according to any of the preceding claims, wherein the material of the region ii) is a non-cast material not producible by casting, preferably selected from the group consisting of drawn wire, cut moulded parts made from rolled material, extrusion-moulded parts, extruded moulded parts, sintered moulded parts and stamped semifinished products or sheet-metal segments.

5. Electrical conductor, peripherally extending around a magnetizable core (10) or a plurality of magnetizable cores, according to any of the preceding claims, wherein the material of the region i) and/or the material of the region ii) consist(s) of gold, silver, copper, magnesium or aluminium or alloys thereof optionally also with further elements.

6. Electrical conductor, peripherally extending around a magnetizable core (10) or a plurality of magnetizable cores, according to any of the preceding claims, wherein the magnetizable core (10) is
- a coil core, in particular a laminated coil core, particularly preferably a rotor laminate stack or a stator laminate stack or a part thereof, or
- a core composed of solid material, preferably composed of solid soft iron, or
- a powder core, preferably consisting of FeSi, NiFe, CoFe, or
- a ferrite core, or
- a hybrid core composed of soft-magnetic material sheathed with an insulation layer.

7. Electrical conductor, peripherally extending around a magnetizable core (10) or a plurality of magnetizable cores, according to any of the preceding claims, wherein the composition of the material of the region i) differs from that of the region ii) by ≥2% by weight, preferably ≥5% by weight, particularly preferably ≥10% by weight, relative to the atoms present in the respective region.

8. Stator, rotor, inductor, transformer or coil, comprising an electrical conductor, peripherally extending around a magnetizable core (10) or a plurality of magnetizable cores, according to any of the preceding claims.

9. Method for producing an electrical conductor, peripherally extending around a magnetizable core (10) or a plurality of magnetizable cores, according to any of Claims 1 to 7, comprising the following steps:
a) providing a magnetizable core (10) or a plurality of magnetizable cores,
b) providing conductor sections composed of material for the regions ii) as defined in any of Claims 1 to 7,
c) applying the conductor sections to the magnetizable core (10) or the magnetizable cores,
d) providing a casting mould or a plurality of casting moulds for producing the regions i),
e) arranging the casting mould or casting moulds such that the plurality of conductor section ends are in the interior of the casting mould,
f) providing castable material for the regions i),
g) casting the castable material into the casting mould so that the resulting regions i) each connect two conductor sections as regions ii).

10. Method according to Claim 9, wherein the plurality of conductor sections provided in step b) are U-shaped (U1, U2, U3, U4, U5, U6, U7).

11. Method according to Claim 10, wherein the conductor sections are applied alternately from opposite directions in step c).

12. Method according to either of Claims 10 and 11, wherein, besides the U-shaped conductor sections (U1, U2, U3, U4, U5, U6, U7), I-shaped conductor sections (i1, i2) are also provided for regions ii) in step b) and are applied in step c).

## Revendications

1. Conducteur électrique, entourant un noyau magnétisable (10) ou plusieurs noyaux magnétisables,
dans lequel le conducteur électrique comprend, le long de la périphérie ou le long de plusieurs ou de toutes les périphéries, au moins une zone i) en un matériau (11) coulé ou pouvant être généré par coulage qui dispose précisément de deux zones de contact qui représentent la transition à une zone ii) en un matériau conducteur (U1, U2, U3, U4, U5, U6, U7, i1, i2) modifié par rapport au matériau coulé ou pouvant être généré par coulage de la zone i),
dans lequel un moule ou plusieurs moules est ou sont agencés sur le conducteur électrique dans la zone de la zone i) ou des zones i) de sorte que la ou les zones i) ainsi que toutes les zones de contact se trouvent à l'intérieur du moule.

2. Conducteur électrique, entourant un noyau magnétisable (10) ou plusieurs noyaux magnétisables, selon la revendication 1, dans lequel le conducteur électrique comprend, le long de la périphérie ou le long de plusieurs ou de toutes les périphéries,
respectivement précisément une zone i) en un matériau coulé ou pouvant être généré par coulage qui dispose de deux zones de contact qui représentent la transition à une zone ii) en un matériau conducteur modifié par rapport au matériau coulé ou pouvant être généré par coulage de la zone i) ou
respectivement précisément deux zones i) en un matériau coulé ou pouvant être généré par coulage qui disposent respectivement de deux zones de contact qui représentent la transition à une zone ii) en un matériau conducteur modifié par rapport au matériau coulé ou pouvant être généré par coulage de la zone i).

3. Conducteur électrique, entourant un noyau magnétisable (10) ou plusieurs noyaux magnétisables, selon la revendication 1 ou 2, dans lequel la zone i) dispose d'une aire de section de conducteur supérieure à celle de la zone ii).

4. Conducteur électrique, entourant un noyau magnétisable (10) ou plusieurs noyaux magnétisables, selon l'une des revendications précédentes, dans lequel le matériau de la zone ii) est un matériau non coulé et ne pouvant pas être généré par coulage, de préférence sélectionné à partir du groupe se composant d'un fil tréfilé, de pièces moulées coupées de produit laminé, de pièces moulées extrudées, de pièces moulées boudinées, de pièces moulées frittées et de produits semi-finis estampés ou de segments de tôle.

5. Conducteur électrique, entourant un noyau magnétisable (10) ou plusieurs noyaux magnétisables, selon l'une des revendications précédentes, dans lequel le matériau de la zone i) et/ou le matériau de la zone ii) se compose d'or, d'argent, de cuivre, de magnésium ou d'aluminium ou de leurs alliages éventuellement aussi avec d'autres éléments.

6. Conducteur électrique, entourant un noyau magnétisable (10) ou plusieurs noyaux magnétisables, selon l'une des revendications précédentes, dans lequel le noyau magnétisable (10)
- est un noyau de bobine, en particulier un noyau de bobine lamellaire, de manière particulièrement préférée un paquet de tôles de rotor ou un paquet de tôles de stator ou une partie de celui-ci ou
- un noyau en matériau plein, de préférence en fer doux massif ou
- un noyau en poudre, composé de préférence de FeSi, NiFe, CoFe ou
- un noyau de ferrite ou
- un noyau hybride en un matériau magnétique doux enveloppé avec une couche d'isolation.

7. Conducteur électrique, entourant un noyau magnétisable (10) ou plusieurs noyaux magnétisables selon l'une des revendications précédentes, dans lequel la composition du matériau de la zone i) se distingue de celle de la zone ii) à ≥ 2 % en poids, de préférence ≥ 5 % en poids, de manière particulièrement préférée ≥ 10 % en poids par rapport aux atomes présents dans la zone respective.

8. Stator, rotor, inductance, transformateur ou bobine, comprenant un conducteur électrique, entourant un noyau magnétisable (10) ou plusieurs noyaux magnétisables, selon l'une des revendications précédentes.

9. Procédé de fabrication d'un conducteur électrique, entourant un noyau magnétisable (10) ou plusieurs noyaux magnétisables selon l'une des revendications 1 à 7, comprenant les étapes suivantes :
a) la fourniture d'un noyau magnétisable (10) ou de plusieurs noyaux magnétisables,
b) la fourniture de sections de conducteur en matériau pour les zones ii) comme elles sont définies selon l'une des revendications 1 à 7,
c) le montage des sections de conducteur au niveau du noyau magnétisable (10) ou des noyaux magnétisables,
d) la fourniture d'un moule ou de plusieurs moules pour la génération des zones i),
e) l'agencement du moule ou des moules de sorte que la pluralité des extrémités de section de conducteur soit à l'intérieur du moule,
f) la fourniture de matériau coulable pour les zones i),
g) le coulage du matériau coulable dans le moule de sorte que les zones apparues i) relient respectivement deux sections de conducteur comme zones ii) .

10. Procédé selon la revendication 9, dans lequel la pluralité des sections de conducteur fournies à l'étape b) est en forme de U (U1, U2, U3, U4, U5, U6, U7) .

11. Procédé selon la revendication 10, dans lequel les sections de conducteur sont montées à l'étape c) alternativement à partir d'une direction opposée.

12. Procédé selon l'une des revendications 10 à 11, dans lequel des sections de conducteur (i1, i2) en forme de 1 sont aussi fournies pour des zones ii) à l'étape b et montées à l'étape c) à côté des sections de conducteur en U (U1, U2, U3, U4, U5, U6, U7).
